# EUROPÄISCHE PATENTSCHRIFT

(11) **EP 0 993 349 B1**
(45) Veröffentlichungstag und Bekanntmachung des Hinweises auf die Patenterteilung: **29.01.2003**
(21) Anmeldenummer: 98948772.3
(22) Anmeldetag: 12.08.1998
(51) Int. Cl.: B23D 19/06

(54) **VORRICHTUNG ZUM SCHNEIDEN DER LÄNGSKANTEN VON FLACHBÄNDERN**
DEVICE FOR CUTTING LONGITUDINAL EDGES OF FLAT STRIPS
DISPOSITIF POUR DECOUPER DES ARETES LONGITUDINALES DE BANDES PLATES

(30) Priorität: 26.08.1997 DE 19736989
(43) Veröffentlichungstag der Anmeldung: 19.04.2000
(73) Patentinhaber: ROBERT BOSCH GMBH, 70442 Stuttgart (DE)
(72) Erfinder: WILHELM, Manfred, D-71735 Eberdingen (DE); MAZURKIEWICZ, Julius, B-3290 Diest (BE)
(86) Internationale Anmeldenummer: DE9802316
(87) Internationale Veröffentlichungsnummer: WO99010122

(56) Entgegenhaltungen:
- EP-A- 0 189 952
- FR-A- 2 204 478
- US-A- 3 517 532
- US-A- 4 061 063

## Beschreibung

### Stand der Technik

Die Erfindung betrifft eine Vorrichtung zum Schneiden der Längskanten von Flachbändern, insbesondere Metallbändern, der im Oberbegriff des Anspruchs 1 definierten Gattung.

Solche Vorrichtungen sind als sog. Bandspaltanlagen bekannt, auf denen Metallbänder mit konstanter Materialstärke in konstanter Breite geschnitten werden. Hierzu sind die kreisförmigen Schneiden in zwei zueinander parallelen Ebenen auf zwei rollenförmigen Messern und die kreisförmigen Gegenschneiden in zwei parallelen Ebenen auf einem rollenförmigen Gegenmesser ausgebildet, wobei alle Ebenen rechtwinklig zu den Achsen von Messer und Gegenmesser ausgerichtet sind. Die Messer einerseits und die Gegenmesser andererseits rotieren um zueinander parallele Achsen, deren Abstand so gewählt ist, daß zwischen den Messern und Gegenmessern ein radialer Spalt verbleibt, durch den das zu schneidende Metallband tangential zu den kreisförmigen Schneiden und Gegenschneiden hindurchgeführt wird. Der gegenseitige axiale Abstand der Messer ist auf die gewünschte Breite des geschnittenen Metallbandes eingestellt, und die radiale Breite des Banddurchführungsspaltes ist an die Materialstärke des Metallbandes angepaßt, so daß die Schneiden der Messer beim Schneiden mit konstanter Eintauchtiefe in das Bandmaterial eindringen.

### Vorteile der Erfindung

Die erfindungsgemäße Vorrichtung zum Schneiden der Längskanten von Flachbändern, insbesondere Metallbändern, mit den Merkmalen des Anspruchs 1 hat den Vorteil, daß Bänder mit über einen Bandabschnitt variabler Breite geschnitten werden können, wobei die im wesentlichen sinus- oder kosinusförmige Schnittkontur des Bandabschnitts an den Längskanten des Flachbandes durch entsprechende Abänderung der Schrägungen der Ebenen von Schneiden und Gegenschneiden leicht an Vorgaben angepaßt werden können. Die vorgegebene Form der beiden Längskanten innerhalb eines jeden Bandabschnitts wird mit einer vollen Umdrehung der umlaufenden Schneiden und Gegenschneiden erzeugt, so daß bei einer Vielzahl von Umdrehungen ein Band mit einstückig aneinanderliegenden Bandabschnitten mit jeweils gleichem Konturenverlauf an den Längskanten entsteht.

Durch die in den weiteren Ansprüchen aufgeführten Maßnahmen sind vorteilhafte Weiterbildungen und Verbesserungen der im Anspruch 1 angegebenen Schneidvorrichtung möglich.

Gemäß einer bevorzugten Ausführungsform der Erfindung sind die Schneiden auf je einem von zwei beabstandeten, rollenförmigen Messern und die Gegenschneiden auf einem rollenförmigen Gegenmesser ausgebildet und die Messer und Gegenmesser auf voneinander beabstandeten, zueinander parallelen Achsen drehend angeordnet. Die Schneiden werden dabei bevorzugt von den Umlaufkanten der einander zugekehrten Stirnflächen der Messer und die Gegenschneiden von den Umlaufkanten der voneinander abgekehrten Stirnflächen des Gegenmessers gebildet.

Zur vereinfachten Synchronisation der Drehstellung von Schneiden und Gegenschneiden sind gemäß einer vorteilhaften Ausführungsform der Erfindung die beiden Messer in Drehrichtung starr miteinander so verbunden, daß der lichte axiale Abstand zwischen den Stirnflächen der Messer an zwei diametralen Schneidenstellen zum einen ein Maximum und zum anderen ein Minimum ergibt, und ist die Drehstellung des Gegenmessers so auf die Drehstellung der miteinander verbundenen Messer abgestimmt, daß am Banddurchführungsspalt zu Beginn bzw. am Ende einer jeden vollen Umdrehung der Messer und des Gegenmessers der kleinste axiale Abstand der Gegenmesserschneiden und der minimale axiale Abstand der Messerschneiden und nach einer jeden halben Umdrehung der größte axiale Abstand der Gegenmesserschneiden und der maximale axiale Abstand der Messerschneiden oder umgekehrt jeweils gleichzeitig auftreten.

Gemäß einer vorteilhafte Ausführungsform der Erfindung ist der Zwischenraum zwischen den beiden rollenförmigen Messern mit einer synchron mit den Messern umlaufenden Ausdrückscheibe ausgefüllt, die vorzugsweise am Umfang mit einer Schicht aus elastischem Material, z.B. Gummi, belegt ist, wobei der Außendurchmesser der elastischen Schicht etwas größer bemessen ist als der Außendurchmesser der Schneiden der Messer. Diese Ausdrückscheibe verhindert, daß das geschnittene Band sich zwischen den Messern hineindrückt und sich dort festklemmt. Vorzugsweise werden die beiden Messer und die Ausdrückscheibe zu einem um eine gemeinsame Achse rotierenden Rollenmessersatz miteinander verbunden.

Gemäß einer vorteilhaften Ausführungsform der Erfindung ist der Umfang der Schneiden und Gegenschneiden um einen empirisch bestimmten Korrekturfaktor größer bemessen als die verlangte, bei einer Umdrehung der Messer zu erzeugende Bandabschnittlänge. Dieser Korrekturfaktor berücksichtigt unterschiedliche Banddicke, Materialhärte und die Größe einer ggf. am Band angreifenden Zugkraft. Durch diese Maßnahme wird ein durch Schlupf zwischen Schneidebewegung und Bandvorschub sich einstellender Wegversatz annähernd kompensiert und auftretende Schnittlängenfehler reduziert. Zur Herstellung von Messer und Gegenmesser wird der erforderliche Durchmesser der Schneiden und Gegenschneiden aus dem so ermittelten, korrigierten Umfang berechnet.

Gemäß einer vorteilhaften Ausführungsform der Erfindung ist das Flachband an beiden Längsseiten mit sich gegenüberliegenden Ausklinkungen versehen, die paarweise äqudistant mit einem dem Umfang der Schneiden bzw. der Gegenschneiden entsprechenden Abstand angeordnet sind. Die Tiefe der beiden Ausklinkungen ist dabei so gewählt, daß die zwischen den Ausklinkungen verbleibende Stegbreite des Flachbandes kleiner ist als die an dieser Stelle erzeugte Bandschnittbreite der Messer. Nach jeder vollen Messerumdrehung wird nach Einlaufen der Schneiden und Gegenschneiden in die Ausklinkungen eine Drehwinkelkorrektur der Messer bezüglich der Schnittkonturlänge vorgenommen. Durch die nach jeder Umdrehung der Messer erfolgenden Korrektur der Drehwinkelstellung wird ein auftretender Längenfehler in der Schnittkontur jeweils beseitigt, so daß sich die Längenfehler von Bandabschnitt zu Bandabschnitt nicht aufsummieren können. Solche Längenfehler treten - wie vorstehend bereits erwähnt - durch Schlupf zwischen den Messern und dem Band aber auch durch das Nachschleifen der Schneiden und Gegenschneiden an den Messern auf. Die am Flachband vorgesehenen Ausklinkungen werden bei Verwendung der Bandabschnitte zur Herstellung von sog. Flachbalken-Scheibenwischern, bei denen solche Flachbandabschnitte den die Gummiwischleiste tragenden Federrücken des Wischblattes bilden, gleichzeitig zur Befestigung des Kupplungsstückes zu dem Wischerarm benötigt, so daß bei der zweckgebundenen Beschneidung der Längskanten des Flachbandes gleichzeitig zwei Vorteile vereinigt werden.

Ein Schnittlängenfehler durch Schlupf kann gemäß einer weiteren Ausführungsform der Erfindung dadurch minimiert werden, daß am Flachband eine konstante Zugkraft angreift.

Das Nachschleifen der Schneiden und Gegenschneiden hat aber auch Fehler in der geforderten Bandbreite des endgefertigten Bandabschnitts zur Folge und führt ohne Gegenmaßnahmen auch zu einer Vergrößerung der Schneidspalte zwischen Messer und Gegenmesser und damit zu einer Verschlechterung der geschnittenen Bandkanten durch stärkere Gratbildung. Um hier Abhilfe zu schaffen, ist gemäß einer bevorzugten Ausführungsform der Erfindung der aus den beiden Messern und der dazwischenliegenden Ausdrückscheibe bestehende Rollenmessersatz drehfest auf einer Antriebswelle angeordnet und die beiden Messer an ihren voneinander abgekehrten Stirnseite über je eine auswechselbare Distanzscheibe an Radialschultern der Antriebswelle axial festgelegt. Das Gegenmesser ist längs seiner Mittelebene geteilt und zwischen den beiden Gegenmesserhälften ist eine auswechselbare Distanzscheibe angeordnet, wobei die beiden Gegenmesserhälften und die dazwischenliegende Distanzscheibe lösbar miteinander axial verbunden sind. Werden nunmehr beispielsweise die Schneiden der Messer auf dem Kreisumfang nachgeschliffen, so verkleinert sich die geschnittene maximale und vergrößert sich die geschnittene minimale Breite des Bandes. Dieser Breitenfehler kann nunmehr dadurch korrigiert werden, daß die Distanzscheiben im Rollenmessersatz gegen Distanzscheiben mit kleinerer axialer Dicke ausgetauscht werden und das Gegenmesser zugestellt, d.h. der Abstand zwischen den Achsen von Messer und Gegenmesser verringert wird. Durch die Zustellung des Gegenmessers wird eine auch mit dem Schleifen einhergehende Vergrößerung der Schneidspalte zwischen den Schneiden und Gegenschneiden wieder kompensiert und damit ein sauberer Schnitt mit geringer Gratbildung gewährleistet. Werden die Schneiden auf den Schrägen der Messer nachgeschliffen, so vergrößert sich die maximale und minimale Breite des geschnittenen Bandes und auch die Schneidspalte vergrößern sich. Eine Korrektur kann durch Austausch der Distanzscheiben im Rollenmessersatz gegen Distanzscheiben mit größerer Dicke herbeigeführt werden. Werden die Gegenschneiden auf den Schrägen des Gegenmessers nachgeschliffen, so werden die Schneidspalte vergrößert, was zu schlechten Schnittkanten am Band und auch zu Toleranzabweichungen in der Bandbreite führt. Abhilfe wird hier durch Ersetzen der Distanzscheibe zwischen den Gegenmesserhälften durch eine dickere Distanzscheibe erreicht.

Gemäß einer vorteilhaften Ausführungsform der Erfindung werden die beim Schneiden entstehende beiden Abfallstreifen durch geeignete Mittel vom Gegenmesser abgeleitet und mittels eines rotierenden Trennmessers zerhackt. Dies hat den Vorteil, daß die beiden sich stark in Richtung Gegenmesser krümmenden seitlichen Abfallstreifen den Schneidvorgang nicht beeinträchtigen oder stören können.

Mit der erfindungsgemäßen Vorrichtung ist auch das Schneiden von Flachbändern, deren Banddicke sich längs eines Bandabschnittes verändert, mit über jeden Bandabschnitt variabler Breite möglich. Bei der bereits angesprochenen Herstellung von Flachbalken-Wischblättern für Scheibenwischer von Fahrzeugen wird dabei der die Gummiwischleiste tragende Federrücken aus einem Flachband geformt, das mittig die größte Bandbreite und maximale Bandstärke aufweist, die beide zu den beiden Enden hin jeweils abnehmen. Wird ein solcher Bandabschnitt mit der erfindungsgemäßen Vorrichtung geschnitten, so wird gemäß einer weiteren Ausführungsform der Erfindung der radiale Spaltabstand zwischen den Messern und den Gegenmessern, der durch den Abstand der Achsen von Messer und Gegenmesser bestimmt ist, auf die kleinste Materialstärke des Bandabschnitts eingestellt. Dadurch wird das Band an der Stelle der größten Banddicke stärker in den von der elastischen Schicht auf der Ausdrückscheibe ausgefüllten Bereich hineingepreßt und durchläuft dabei eine andere Bahn als die Schneiden der Messer, wodurch die Schnittlängenkontur verfälscht wird. Auch tritt hier die größte Werkzeugbelastung auf, was zu einem schnellen Verschleiß der Schneiden führt. Außerdem verringert sich der relative Schneidspalt, was zu einer erhöhten Schnittkantenbelastung und zu unschönen Nachschnittflächen führt. Der insgesamt erhöhte Schneidenverschleiß begünstigt Gratbildung auf der dem Gegenmesser zugekehrten Seite. Um diese Nachteile zu beseitigen, werden gemäß einer vorteilhaften Ausführungsform der Erfindung die die Gegenschneiden tragenden, geschrägten Stirnflächen des Gegenmessers so korrigiert, daß rundum ein jeweils optimaler, d.h. konstanter, Schneidspalt zwischen den beiden Paaren von Schneiden und Gegenschneiden entsteht.

Gemäß einer bevorzugten Ausführungsform der Erfindung wird zur Beseitigung der vorstehend aufgeführten Nachteile alternativ die Eintauchtiefe der Schneiden in das Bandmaterial der Banddicke nachgeführt, was sich am einfachsten dadurch realisieren läßt, daß der Abstand zwischen den Achsen von Messer und Gegenmesser in Abhängigkeit von der Banddicke des in den Schneidbereich einlaufenden Bandbereichs proportional verändert wird.

### Zeichnung

Die Erfindung ist anhand eines in der Zeichnung dargestellten Ausführungsbeispiels in der nachfolgenden Beschreibung näher erläutert. Es zeigen jeweils in schematischer Darstellung:
- Fig. 1: ausschnittweise eine Frontansicht einer Vorrichtung zum Schneiden der Längskanten von Flachbändern mit Darstellung der Messer und des Gegenmessers,
- Fig. 2: eine gleiche Darstellung wie in Fig. 1 in einer um eine halbe Umdrehung gegenüber Fig. 1 verdrehten Drehstellung von Messer und Gegenmesser,
- Fig. 3: eine perspektivische Ansicht eines von den Messern gebildeten Rollenmessersatzes,
- Fig. 4: eine vergrößerte Darstellung des Ausschnitts IV in Fig. 1,
- Fig. 5: ausschnittweise eine Seitenansicht der Vorrichtung zur Erläuterung des Schneidvorgangs,
- Fig. 6: ausschnittweise eine Draufsicht eines mit der Schneidvorrichtung geschnittenen Flachbandes,
- Fig. 7: zwei verschiedene Ansichten des gegenüber Fig. 6 modifizierten Flachbandes in Zuordnung zu den Schneiden und Gegenschneiden,
- Fig. 8: eine Frontansicht eines modifizierten Gegenmessers.

### Beschreibung des Ausführungsbeispiels

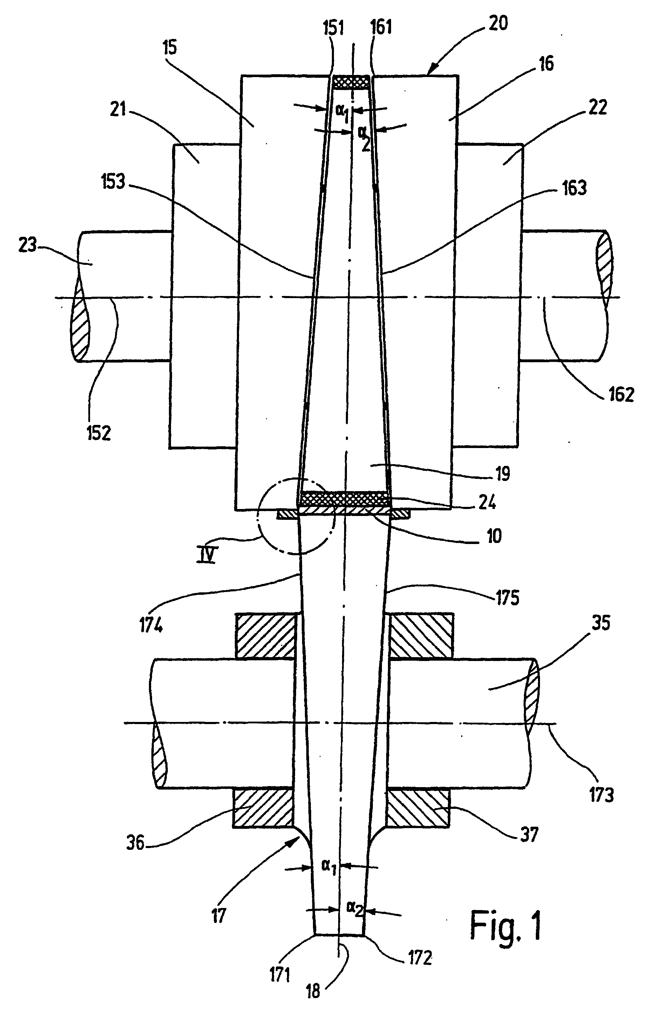

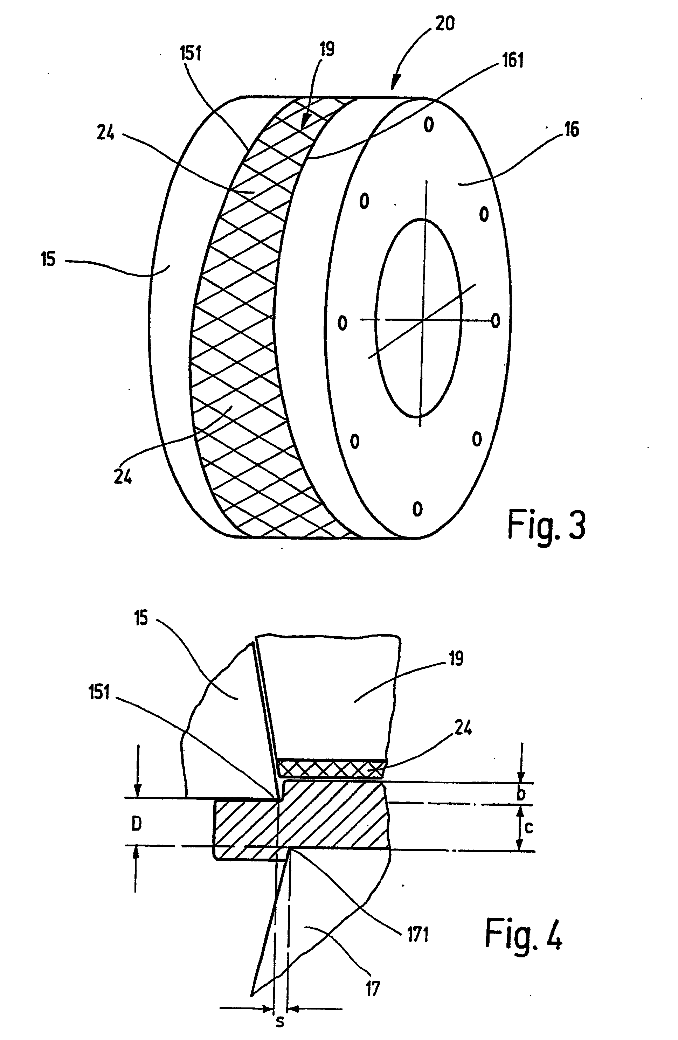

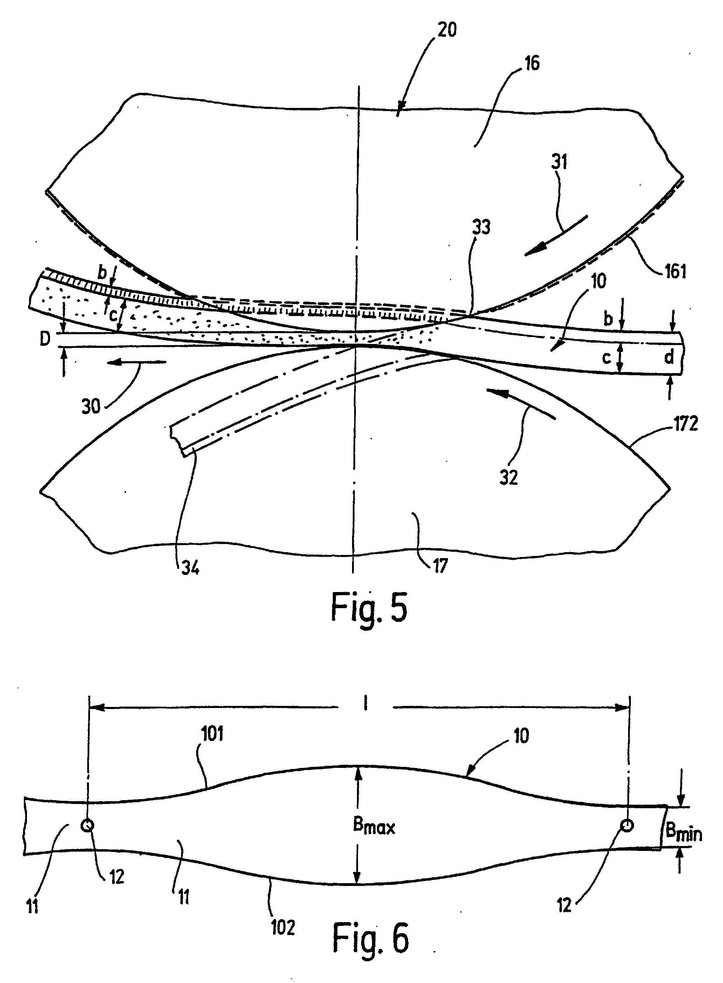

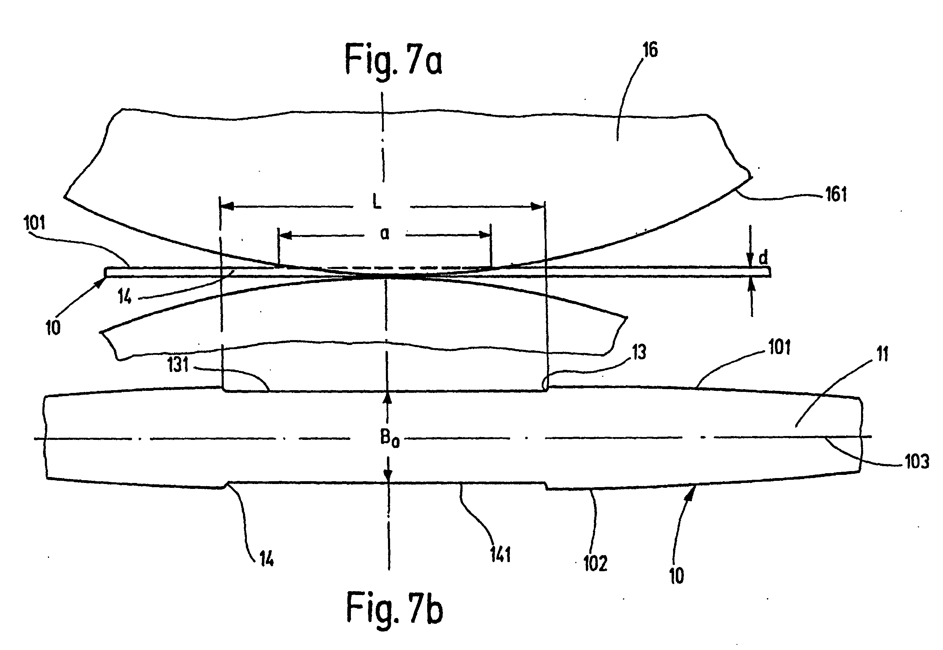

Die in Fig. 1 und 3 ausschnittweise in Frontansicht und schematisch skizzierte Schneidvorrichtung, auch Bandspaltanlage genannt, dient zum Schneiden der Längskanten von Flachbändern, insbesondere Metallbändern, mit variabler Breite, wobei zusätzlich auch die Materialstärke oder Banddicke variieren kann. In Fig. 6 ist ein solches Flachband 10, insbesondere Metallband, ausschnittweise in Draufsicht nach dem Beschneiden seiner Längskanten 101,102 dargestellt. Im Flachband 10 schließen sich fortlaufende Bandabschnitte 11 hintereinander an, deren Anfang und Ende durch Triggerlöcher 12 im Flachband 10 gekennzeichnet sind, die zum Steuern des Schneidvorgangs dienen. In jedem Bandabschnitt 11 ändert sich die Breite B über die Abschnittslänge 1 zwischen einem Maiximalwert Bₘₐₓ und einem Minimalwert Bₘᵢₙ, wobei die Bandbreite B von der Mitte zu den beiden Enden hin abnimmt. Die geschnitten Längskanten 101,102 des Bandes 10 weisen dabei innerhalb eines jeden Bandabschnitts 11 einen etwa kosinusförmigen Verlauf auf. Die Materialstärke oder die Banddicke d des Flachbandes 10 (Fig. 5 und 7) ist konstant, kann aber auch innerhalb eines Bandabschnittes 11 über dessen Länge 1 zwischen einem maximalen und minimalen Wert variieren. Dabei liegt der maximale Wert der Banddicke d wiederum in der Mitte eines jeden Bandabschnitts 11 und nimmt zu den beiden Enden des Bandabschnitts 11 kontinuierlich ab. In einem realistischen Ausführungsbeispiel beträgt die maximale Banddicke in Bandabschnittmitte 1,2mm und an den beiden Bandabschnittsenden, also im Bereich der Triggerlöcher 12, 0,4mm. Solche Bandabschnitte 11 mit der Länge 1 werden nach entsprechendem Biegen zur Herstellung von sog. Flachbalken-Wischblättern von Scheibenwischern für Kraftfahrzeuge benötigt, wie diese in der US-PS 3 192 551 beschrieben sind. Diese Bandabschnitte 11 bilden bei jedem Wischblatt den gebogenen Federrücken, der seinerseits die Gummiwischleiste trägt und über ein Kupplungsstück an dem Wischerarm befestigt ist. Zur Aufnahme des Kupplungsstückes dient ein Paar mittig an den Längskanten 101,102 eingeschnittene Ausklinkungen 13,14, wie sie in Fig. 7 zu sehen sind. Die Tiefe der beiden Ausklinkungen 13,14 ist dabei so gewählt, daß die zwischen den Ausklinkungen verbleibende Stegbreite B₀ (Fig. 7b) kleiner ist als die an dieser Stelle beim Schneidvorgang erzeugte Schnittbreite B des Bandes 10. Die Grundlinie 131 bzw. 141 der beiden Ausklinkungen 13,14 verläuft parallel zur Längsachse 103 des Bandes 10 und weist eine Länge L auf.

Zum Schneiden des Flachbandes 10, wie es als Ergebnis des Schneidvorgangs in Fig. 6 und 7 dargestellt ist, weist die Schneidvorrichtung zwei voneinander axial beabstandete, rollenförmige Messer 16 mit jeweils einer kreisbogenförmigen Schneide 151 bzw. 161 und ein rollenförmiges Gegenmesser 17 mit zwei Gegenschneiden 171 und 172 auf. Die beiden Messer 15,16 rotieren um miteinander fluchtende Messerachsen 152,162 und das Gegenmesser 173 rotiert um eine Gegenmesserachse 173, die parallel zu den Messerachsen 152,162 ausgerichtet ist. Die Schneiden 151,161 der Messer 15,16 werden dabei von den Umlaufkanten der einander zugekehrten Stirnflächen 153 und 163 der Messer 15,16 und die Gegenschneiden 171,172 von den Umlaufkanten an den voneinander abgekehrten Stirnflächen 174,175 des Gegenmessers 17 gebildet. Die beiden Messer 15,16 und das Gegenmesser 17 sind so angeordnet, daß zwischen den Schneiden 151,161 und den Gegenschneiden 171,172 ein radialer Spalt D (Fig. 4) zur Durchführung des Flachbandes 10 verbleibt und zwischen den einander paarweise zugeordneten Schneiden 151,161 und Gegenschneiden 171,172 jeweils ein axialer Schneidspalt S entsteht. In Fig. 4 ist für das Paar aus einander zugeordneter Schneide 151 am Messer 15 und Gegenschneide 171 am Messer 17 der sich bildende Schneidspalt S dargestellt. Der zwischen den Messern 15,16 und dem Gegenmesser 17 sich einstellende radiale Spalt für die Durchführung des Flachbandes 10 ist in Fig. 4 mit D bezeichnet. Dieser radiale Spalt D kann durch Änderung des Paralleläbstands zwischen den Messerachsen 152,162 und der Gegenmesserachse 173 variiert werden.

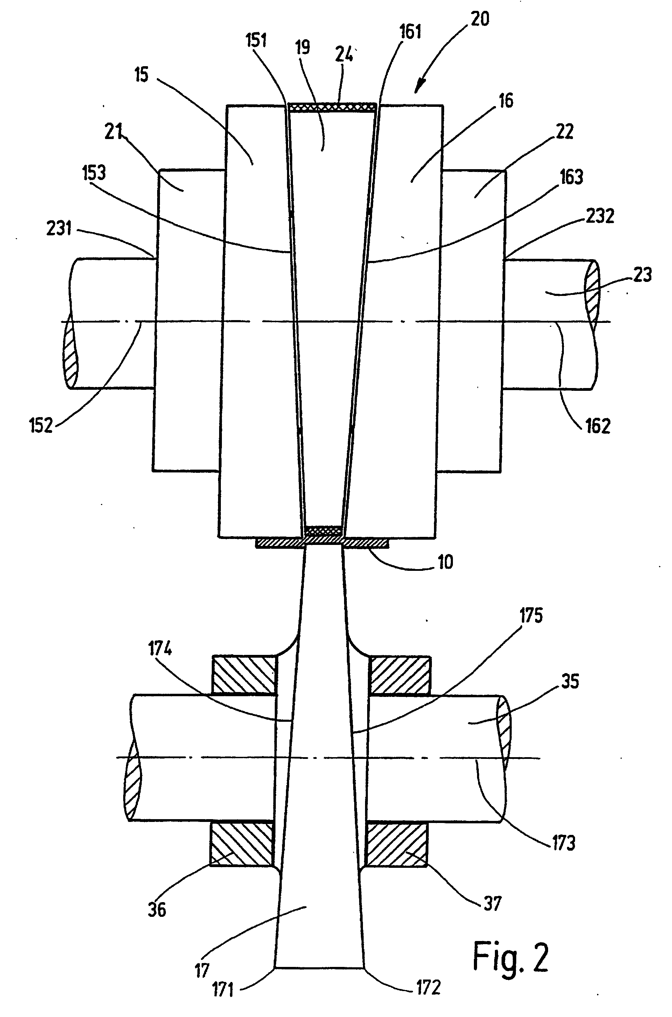

Zum Schneiden des in Fig. 6 und 7 dargestellten Flachbandes 10 mit zwischen der maximalen Bandbreite Bₘₐₓ und der minimalen Bandbreite Bₘᵢₙ variierender Bandbreite B über die Länge 1 eines Bandabschnitts 11 sind einerseits die Durchmesser der kreisbogenförmigen Schneiden 151,161 und Gegenschneiden 171,172 gleich groß bemessen und andererseits die Ebenen, in denen die Schneiden 151,161 und Gegenschneiden 171,172 liegen, gegenüber einer rechtwinklig zu den Messerachsen 152,162 bzw. Gegenmesserachse 173 ausgerichteten Lotebene 18 (Fig. 1) unter einem gleichen spitzen Schrägungswinkel α₁ und α₂ geneigt bzw. angestellt, wobei die beiden Ebenen der Schneiden 151,161 einerseits und die beiden Ebenen der Gegenschneiden 171,172 andererseits gegensinnig zur Lotebene 18 angestellt sind. Die spitzen Schrägungswinkel α₁ und α₂ sind jeweils bei allen Ebenen gleich. Die Drehstellungen der Schneiden 151,161 und Gegenschneiden 171,172 sind so miteinander synchronisiert, daß. bei einer vollen Umdrehung der Schneiden 151,161 und Gegenschneiden 171,172 die beiden Schneidspalte S zwischen der Schneide 151 und der Gegenschneide 171 einerseits und der Schneide 161 und der Gegenschneide 172 andererseits weitgehend konstant bleiben. In Fig. 2 ist eine gleiche Darstellung der Messer 15,16 und des Gegenmessers 17 wie in Fig. 1 wiedergegeben, nachdem die beiden Messer 15,16 und das Gegenmesser 17 eine halbe Umdrehung ausgeführt haben. Während in Fig. 1 die Messer 15,16 und das Gegenmesser 17 eine solche Drehstellung einnehmen, daß am Banddurchführungsspalt D die Schneiden 151,161 sowie die Gegenschneiden 171,172 ihren gegenseitigen größten Axialabstand haben und somit das Flachband 10 mit der größten Breite Bₘₐₓ geschnitten wird, haben die Messer 15,16 und das Gegenmesser 17 in Fig. 2 eine solche Drehstellung eingenommen, daß am Banddurchführungsspalt D die Schneiden 151,161 einerseits und die Gegenschneiden 171,172 andererseits ihren jeweils kleinsten gegenseitigen Axialabstand annehmen, so daß hier das Flachband 10 mit der kleinsten Bandbreite Bₘᵢₙ geschnitten wird.

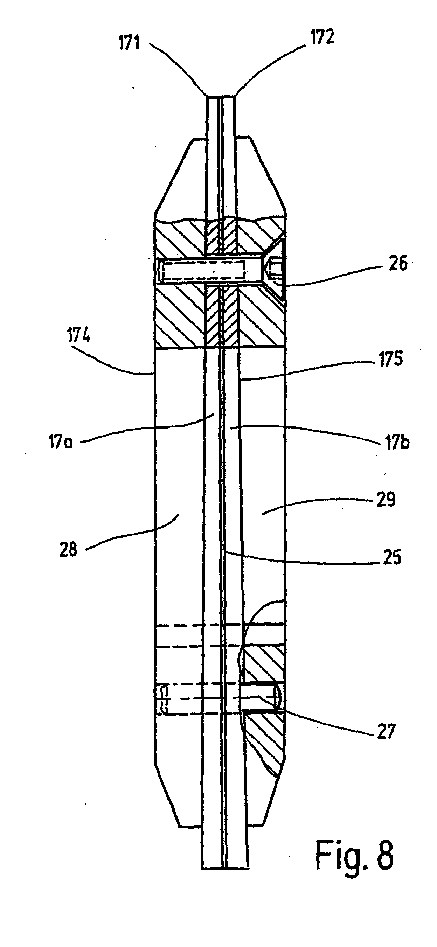

Zur Vereinfachung der Synchronisation der Drehbewegung zwischen den Messern 15,16 sind diese in Drehrichtung starr miteinander so verbunden, daß der lichte axiale Abstand zwischen den Stirnflächen 153,163 der Messer 15,16 an zwei diametralen Schneidstellen zum einen ein Maximum und zum anderen ein Minimum ergibt. Der Zwischenraum zwischen den beiden Stirnflächen 153 und 163 der Messer 15,16 ist mit einer Ausdrückscheibe 19 ausgefüllt, die mit den beiden Messern 15,16, zusammen mit zwei jeweils einem Messer 15 bzw. 16 zugeordneten Distanzscheiben 21,22, zu einem Rollenmessersatz 20 verbunden ist, wie er in Fig. 3 in perspektivischer Darstellung zu sehen ist. Der Rollenmessersatz 20 ist drehfest auf einer Antriebswelle 24 angeordnet (Fig. 1). Die beiden Messer 15,16 sind über die Distanzscheiben 21,22 an Radialschultern 231,232 der Antriebswelle 23 axial festgelegt. Die Distantzscheiben 21,22 sind wechselbar ausgebildet, so daß durch Auswechseln der Distanzscheiben 21,22 mit unterschiedlicher axialer Dicke der Axialabstand der beiden Messer 15,16 und damit der Abstand der beiden Schneiden 151,161 eingestellt werden kann. Mit dem Axialabstand der Schneiden 151,161 ändert sich - bei entsprechender Anpassung des Axialabstandes der Gegenschneiden 171,172 - die Schnittbreite der Schneidvorrichtung. Die Ausdrückscheibe 19 ist auf ihrem Umfang mit einer Schicht 24 aus elastischen Material. z.B. Gummi, belegt, die vorzugsweise aufvulkanisiert ist. Der Außendurchmesser der Schicht 24 ist dabei etwas größer bemessen als der Außendurchmesser der Schneiden 151,161. Das Gegenmesser 17 ist drehfest und axial unverschieblich auf einer Antriebswelle 35 angeordnet, die um die Gegenmesserachse 173 rotiert. Die Verbindung des Gegenmessers 17 mit der Antriebswelle 35 erfolgt durch zwei auf beiden Stirnseiten des Gegenmessers 17 anliegende, auf der Antriebswelle 35 festgesetzte Spannringe 36,37. Zur Anpasung des Axialabstands der beiden Gegenschneiden 171,172 an eine in Grenzen veränderte Schnittbreite ist das Gegenmesser 17, wie dies in Fig. 8 dargestellt ist, längs seiner Mittelebene, die mit der in Fig. 1 dargestellten Lotebene 18 zusammenfällt, geteilt und zwischen den beiden Gegenmessernhälften 17a und 17b eine auswechselbare Distanzscheibe 25 angeordnet. Die Gegenmesserhälfte 17a trägt dabei die Gegenmesserschneide 171, und die Gegenmesserhälfte 17b trägt die Gegenmesserschneide 172. Die beiden Gegenmesserhälften 17a und 17b mit der dazwischenliegende Distanzscheibe 25 sind miteinander lösbar verbunden. Die Verbindung und Positionierung wird durch Spannschrauben 26 und Paßstifte 27 bewirkt, die zwei außen an den geschrägten Stirnflächen 174,175 der beiden Gegenmesserhälften 17a und 17b anliegende Spannbacken 28,29 miteinander verbinden. Von der Spannverbindung zwischen den Spannbacken 28,29 ist in Fig. 8 jeweils eine Spannschraube 26 und ein Paßstift 27 dargestellt.

In Fig. 5 ist der Schneidvorgang an der Längskante 102 des Flachbands 10 illustriert, die von der Schneide 161 und der Gegenschneide 172 beim Durchlaufen des radialen Banddurchführungsspaltes D erzeugt wird. Der Rollenmessersatz 20 mit den Messern 15,16 und das Gegenmesser 17 sind gegensinnig, also im Uhrzeigersinn bzw. im Gegenuhrzeigersinn, angetrieben. Die Drehrichtungen von Rollenmessersatz 20 bzw. von Messer 15,16 und Gegenmesser 17 sind in Fig. 5 mit 31 und 32 gekennzeichnet. Zur Minimierung eines zwischen den Schneiden 151,161 und Gegenschneiden 171,172 einerseits und dem Flachband 10 andererseits auftretenden Schlupfes, was zu einem Schnittkonturlängenfehler führen würde, greift an dem Flachband 10 eine konstante Zugkraft an, die das Flachband 10 in der in Fig. 5 mit Pfeil 30 gekennzeichneten Zugrichtung zwischen Rollenmessersatz 20 und Gegenmesser 17 hindurchzieht. Der Durchmesser der Schneiden 151,161 und der Gegenschneiden 171,172 berechnet sich aus der vorgegebenen Länge 1 des Bandabschnittes 11 (Fig. 6), die bei der Abwicklung der Schneiden 151,161 bzw. Gegenschneiden 171,172 auf die Bandebene entsteht. Durch unterschiedliche Bewegungsrichtungen von Schneiden 151,161, Gegenschneiden 171,172 einerseits und Bandschnittkanten 101,102 andererseits entsteht dennoch ein Konturlängenfehler, der dadurch kompensiert wird, daß der zum Schneiden des Bandabschnitts 11 mit der Länge 1 erforderliche Umfang von Schneiden 151,161 und Gegenschneiden 171,172 um einen Korrekturfaktor k größer gemacht wird als die vorgegebene Konturenlänge. Dieser Korrekturfaktor k wird empirisch bestimmt und ist abhängig von der Dicke d des Flachbandes 10, von der Materialhärte und von der Größe der am Flachband 10 in Richtung 30 angreifenden Zugkraft. Der Durchmesser der Schneiden 151,161 und Gegenschneiden 171,172, der in allen Fällen gleich groß gewählt wird, wird nach der um diesen Korrekturfaktor k vergrößerten Konturschnittlänge berechnet.

Bei dem illustrierten Schneidvorgang tauchen die Schneiden 151,161, wie dies in Fig. 5 für die Schneide 161 illustriert ist, beginnend im Schnittpunkt 33 mit einer Eintauchtiefe b in das Bandmaterial ein (vgl. auch Fig. 4). Beim Durchlauf der Schneiden 151,161 wird dabei das Band 10 bis zur Tiefe b geschnitten und in der restlichen Tiefe c gebrochen, wobei sich auf der dem Gegenmesser 17 zugekehrten Seite der Schnittkante ein Grat bildet. Dieser Grat kann problemlos mittels einer nachgeschalteten Entgratungsvorrichtung beseitigt werden. Die beim Schneiden der Längskanten 101,102 beidseitig entstehenden Abfallstreifen, die in Fig. 5 strichpunktiert angedeutet und mit 34 bezeichnet sind, krümmen sich stark in Richtung Gegenmesser 17. Um den Schneidvorgang nicht zu stören, sind hier nicht dargestellte Mittel vorgesehen, mit welchen die beiden Abfallstreifen 34 vom Gegenmesser 17 sauber abgeleitet werden. Bevorzugt werden die Abfallstreifen 34, wie hier ebenfalls nicht dargestellt ist, anschließend mittels rotierender Trennmesser zerkleinert.

Die Drehstellung der Schneiden 151,161 und Gegenschneiden 171,172 und der Durchlauf des Flachbandes 10 durch den Banddurchführungsspalt D ist so koordiniert, daß die Schneiden 151,161 in der in Fig. 1 dargestellten Drehstellung des Rollenmessersatzes 20 und des Gegenmessers 17 jeweils in die beiden einander am Band 10 gegenüberliegenden Ausklinkungen 13,14 einlaufen. Dieses Einlaufen der Schneiden 151,161 in die beiden Ausklinkungen 13,14 erfolgt nach jeder vollen Umdrehung des Rollenmessersatzes 20 und des Gegenmessers 17. Um zu verhindern, daß noch verbleibende Längenfebler in der Schnittkontur eines Bandabschnittes 11 sich von Bandabschnitt 11 zu Bandabschnitt 11 auf summieren, wird jeweils nach Einlaufen der Schneiden 151,161 und Gegenschneiden 171,172 in die beiden Ausklinkungen 13,14, also während der Zeitdauer, in welcher die Schneiden 151,161 nicht in das Bandmaterial eindringen, die Drehstellungen von Rollenmessersatz 20 und Gegenmesser 17 bezüglich des Banddurchlaufs korrigiert. Dabei wird die Drehstellung des Rollenmessersatzes 20 und die des Gegenmessers 17 mit dem jeweils größten Axialabstand von Schneiden 151,161 bzw. Gegenschneiden 171,172 am Banddurchlaufspalt D auf die Mitte der Ausklinkungen 13,14 ausgerichtet. Zur Synchronisation von Banddurchlauf und Drehstellung von Rollenmessersatz 20 und Gegenmesser 17 dienen die Triggerlöcher 12 im Flachband 10. Für diesen Synchronisationsprozeß wird die Länge L der Ausklinkungen 13,14 und die Sehne a des beim Schneiden des Bandes 10 in das Band eintauchenden Bereichs der Schneiden 151,161 aufeinander abgestimmt. Bevorzugt wird dabei die Länge L um das 1,5-fache der Sehne a größer gemacht.

Versuche haben gezeigt, daß mit den aus geeignetem Material gefertigten Schneiden 151,161 und Gegenschneiden 171,172 eine Schnittlänge bis zum ersten Nachschärfen zwischen 50 und 100km erreicht werden kann, je nachdem ob das Flachband 10 vergütet ist oder nicht. Ein Nachschleifen der Schneiden 151,161 und der Gegenschneiden 171,172 bringt insofern Probleme mit sich, als sich sowohl die Schnittbreite B des Bandes 10 ändert, als auch die Schneidspalte S zwischen der Schneide 151 und Gegenschneide 171 einerseits und der Schneide 161 und Gegenschneide 172 andererseits sich verändern. Werden die Schneiden 151,161 auf ihrer Umfangsfläche nachgeschliffen, so wird die maximale Bandbreite Bₘₐₓ kleiner und die minimale Bandbreite Bₘᵢₙ größer und auch die beiden Schneidspalte S vergrößern sich. Ebenso verkürzt sich die Schnittlängenkontur. Während letztere nicht korrigierbar ist, kann der Fehler in der Schnittbreite durch Austausch der Distanzscheiben 21,22 (Ersetzen durch axial dünnere Distanzscheiben) und durch Zustellung des Gegenmessers 17 kompensiert werden. Bei der Zustellung des Gegenmessers 17 wird der Abstand zwischen der Achse 152,162 des Rollenmessersatzes 20 und der Gegenmesserachse 173 verkleinert. Dadurch dringt das Gegenmesser 17 stärker in den Bereich zwischen den beiden Messern 15,16 ein, wodurch sich sowohl die minimale Schnittbreite Bₘᵢₙ wieder verkleinert als auch die beiden Schneidspalte S kleiner werden. Werden hingegen die Schneiden 151,161 auf den einander zugekehrten Messerschrägen nachgeschliffen, so vergrößert sich Bₘᵢₙ, Bₘₐₓ und die Schneidspalte S. Die Schnittkonturlänge bleibt unverändert. Eine Korrektur der Schnittbreite und der Schneidspalte kann wiederum über die Distanzscheiben 21,22 durchgeführt werden, die durch axial dickere Distanzscheiben ersetzt werden.

Werden die Gegenschneiden 171,172 auf dem Gegenmesser 17 auf ihren voneinander abgekehrten Schrägen nachgeschliffen, so treten wiederum Fehler in der Bandbreite auf, wobei sich sowohl Bₘᵢₙ als auch Bₘₐₓ ebenso wie die beiden Schneidspalte S vergrößern. Abhilfe kann hier durch das gemäß Fig. 8 ausgeführte Gegenmesser 17 erfolgen, bei welchem die Spannbacken 28,29 gelöst werden und die Distanzscheibe 25 zwischen den beiden Gegenmesserhälften 17a und 17b durch eine Distanzscheibe 25 größerer Dicke ersetzt wird. Mit dieser Korrektur verkleinern sich auch wiederum die beiden Schneidspalte S, so daß nach wie vor ein sauberer Schnitt mit geringer Gratbildung erzielt wird.

Werden mit der beschriebenen Schneidvorrichtung die Längskanten 101 und 102 eines Flachbandes 10 mit variabler Banddicke d geschnitten, so wird der radiale Abstand der Achse 152,162 des Rollenmessersatzes 20 von der Gegenmesserachse 173 und damit die Größe des radialen Banddurchtrittspaltes D auf die kleinste Banddicke d eingestellt. Beim Schneiden wird dann der Bereich der dickeren Bandbreite d unter Zusammendrücken der elastischen Schicht 24 stärker in den von der Ausdrückscheibe 19 ausgefüllten, sich verengenden Bereich zwischen den beiden Messern 15,16 eingezwängt, durchläuft dabei eine andere Bahn als die Schneiden 151,161 der Messer 15,16, wodurch die beiden Schneidspalte S zwischen der Schneide 151 und der Gegenschneide 171 einerseits und zwischen der Schneide 161 und der Gegenschneide 172 andererseits an den dickeren Stellen des Bandes 10 zu klein werden, was zu erhöhter Schnittkantenbelastung sowie zu unschönen Nachschnittflächen führt. Der dadurch erhöhte Schnittkantenverschleiß begünstigt die Gratbildung auf der dem Gegenmesser 17 zugekehrten Seite des Gegenmessers 17. Um dies zu kompensieren, sind die schräggestellten Stirnflächen 174 und 175 des Gegenmessers 17 so korrigiert, daß rundum optimale, d.h. weitgehend konstante Schneidespalte S entstehen. Alternativ hierzu wird zur Vermeidung der vorstehend beschriebenen Nachteile beim Schneiden von Bandmaterial mit variabler Banddicke d die Eintauchtiefe b (Fig. 5) der Schneiden 151 und 161 auf den Messern 15,16 in Abhängigkeit von der Banddicke d nachgesteuert. Hierzu wird mittels einer nicht dargestellten Steuereinheit der Achsabstand zwischen dem Rollenmessersatz 20 und der Gegenschneide 17 proportional zu dem in den Schneidbereich, d.h. in den Banddurchführungsspalt D, einlaufenden Bandbereich des Flachbandes 10 verändert, wobei mit zunehmender Banddicke d der Abstand vergrößert und umgekehrt mit abnehmender Banddicke d der Abstand wieder verkleinert wird. Diese Steuerung erfolgt mittels einer NC-Steuereinheit über ein Programm, das den Dickenverlauf des Bandes 10 über den Bandabschnitt 11 mit der Länge 1 kennt. Das Programm wird mittels der Triggerlöcher 12 aufgerufen, deren Einlaufen in den Schneidbereich mit einem geeigneten Sensor detektiert wird, der ein Triggersignal für die Steuereinheit zum Aufruf des vorgegebenen Programms generiert.

Die Außenkontur der Längskanten 101 und 102 des Flachbands 10 hängt direkt von den Schneiden 151,161 und den Gegenschneiden 171,172 ab, deren Verlauf entlang des Umfangs im Sinne einer Abwicklung den Verlauf der Längskanten 101 und 102 bestimmt. Die Schrägwinkel α₁ und α₂ können bei Bedarf unterschiedliche Werte annehmen. Darüber hinaus können Schneiden 151,161 und Gegenschneiden 171,172 in sich verformt oder gebogen sein und/oder Wellenform oder auch Aussparungen aufweisen.

## Patentansprüche

1. Vorrichtung zum Schneiden der Längskanten von Flachbändern, insbesondere Metallbändern, mit zwei voneinander axial beabstandeten, kreisbogenförmigen Schneiden (151,161), die um miteinander fluchtende Achsen (152,162) rotieren, und mit zwei voneinander axial beabstandeten, kreisbogenförmigen Gegenschneiden (171,172), die um miteinander fluchtende, zu den Achsen (152,162) der Schneiden (151,161) parallele Achsen (173) rotieren und den Schneiden (151,161) so zugeordnet sind, daß zwischen den Schneiden (151,161) und den Gegenschneiden (171,172) ein radialer Spalt (D) zur Durchführung des Bandes (10) verbleibt und sich zwischen den einander paarweise zugeordneten Schneiden (151,161) und Gegenschneiden (171,172) jeweils ein axialer Schneidspalt (S) ausbildet, **dadurch gekennzeichnet, daß** die Durchmesser der Schneiden (151,161) und Gegenschneiden (171,172) im wesentlichen gleich groß bemessen sind, daß die Schneiden (151,161) und Gegenschneiden (171,172) in Ebenen liegen, die gegenüber einer rechtwinklig zu den Schneiden- oder Gegenschneidenachsen (152,162,173) ausgerichteten Lotebene (18) unter einem spitzen Schrägungswinkel (α₁,α₂) verlaufen, wobei die Schneidenebenen einerseits und die Gegenschneidenebenen andererseits jeweils gegensinnig zur Lotebene (18) geneigt bzw. angestellt sind, und daß die Drehstellungen der Schneiden (151,161) und Gegenschneiden (171,172) so miteinander synchronisiert sind, daß die beiden Schneidspalte (S) über eine volle Umdrehung der Schneiden (151,161) und Gegenschneiden (171,172) annähernd konstant bleiben.

2. Vorrichtung nach Anspruch 1, **dadurch gekennzeichnet, daß** die Schneiden (151,161) auf je einem von zwei axial beabstandeten, rollenförmigen Messern (15,16) und die Gegenschneiden (171,172) auf einem rollenförmigen Gegenmesser (17) ausgebildet sind und daß die Messer (15,16) einerseits und das Gegenmesser (17) andererseits auf voneinander beabstandeten, parallelen Achsen (152,162,173) drehend angeordnet sind.

3. Vorrichtung nach Anspruch 2, **dadurch gekennzeichnet, daß** die Schneiden (151,161) von den Umlaufkanten der einander zugekehrten Stirnflächen (153,163) der Messer (15,16) und die Gegenschneiden (171,172) von den Umlaufkanten der voneinander abgekehrten Stirnflächen (174,175) des Gegenmessers (17) gebildet sind.

4. Vorrichtung nach Anspruch 3, **dadurch gekennzeichnet, daß** die beiden Messer (15,16) in Drehrichtung starr miteinander so verbunden sind, daß der lichte axiale Abstand zwischen den Stirnflächen (153,163) der Messer (15,16) an zwei diametralen Schneidenstellen zum einen ein Maximum und zum andern ein Minimum ergibt und daß die Drehstellung des Gegenmessers (17) so auf die Drehstellung der miteinander verbundenen Messer (15,16) abgestimmt ist, daß am Banddurchführungsspalt (D) zu Beginn oder am Ende einer jeden vollen Umdrehung von Messern (15,16) und Gegenmesser (17) der minimale axiale Abstand der Gegenschneiden (171,172) und der minimale axiale Abstand der Schneiden (151,161) und nach einer jeden halben Umdrehung der maximale axiale Abstand der Gegenschneiden (171,172) und der maximale axiale Abstand der Schneiden (151,161) oder umgekehrt jeweils gleichzeitig auftreten.

5. Vorrichtung nach Anspruch 3 oder 4, **dadurch gekennzeichnet, daß** der Zwischenraum zwischen den beiden Stirnflächen (153,163) der Messer (15,16) mit einer synchron mit den Messern (15,16) umlaufenden Ausdrückscheibe (19) ausgefüllt ist.

6. Vorrichtung nach Anspruch 5, **dadurch gekennzeichnet, daß** der Umfang der Ausdrückscheibe (19) mit einer Schicht (24) aus elastischem Material, z.B. Gummi, belegt, vorzugsweise aufvulkanisiert, ist, und daß der Außendurchmesser der Schicht (24) etwas größer bemessen ist als der Außendurchmesser der Schneiden (151,161) der Messer (15,16).

7. Vorrichtung nach Anspruch 5 oder 6, **dadurch gekennzeichnet, daß** die beiden Messer (15,16) und die Ausdrückscheibe (19) zu einem um eine gemeinsame Achse (152,162) rotierenden Rollenmessersatz (20) miteinander verbunden sind.

8. Vorrichtung nach Anspruch 7, **dadurch gekennzeichnet, daß** der Rollenmessersatz (20) drehfest auf einer Antriebswelle (23) sitzt und die beiden Messer (15,16) auf voneinander abgekehrten Stirnseiten über je eine auswechselbare Distanzscheibe (21,22) an Radialschultern (231,232) der Antriebswelle (23) axial festgelegt sind.

9. Vorrichtung nach einem der Ansprüche 1 - 8, **dadurch gekennzeichnet, daß** das Gegenmesser (17) längs seiner Mittelebene (18) geteilt und zwischen den beiden Gegenmesserhälften (17a,17b) mindestens eine auswechselbare Distanzscheibe (25) angeordnet ist und daß die beiden Gegenmesserhälften (17a,17b) und die Distanzscheibe (25) lösbar miteinander axial verbunden sind.

10. Vorrichtung nach einem der Ansprüche 2 - 9, **dadurch gekennzeichnet, daß** der Umfang der Schneiden (151,161) und Gegenschneiden (171,172) um einen empirisch bestimmten Korrekturfaktor (k) größer bemessen ist als die geforderte, bei einer Umdrehung von Messern (15,16) und Gegenmesser (17) zu erzeugenden Bandschnittlänge.

11. Vorrichtung nach Anspruch 10, **dadurch gekennzeichnet, daß** das Band (10) an beiden Längsseiten (101,102) mit sich gegenüberliegenden Ausklinkungen (13,14) mit vorzugsweise parallel zur Bandlängsachse (103) verlaufenden Grundlinien (131,141) versehen ist, die paarweise äguidistant mit einem dem Umfang der Schneiden (151,161) und Gegenschneiden (171,172) entsprechenden Abstand angeordnet sind, daß die Tiefe der beiden Ausklinkungen (13,14) so gewählt ist, daß die zwischen den Ausklinkungen (13,14) verbleibende Stegbreite (B₀) des Bandes (10) kleiner ist als die an dieser Stelle erzeugte Bandschnittbreite der Schneiden (15,16), und daß nach Einlaufen der Schneiden (151,161) und Gegenschneiden (171,172) in die Ausklinkungen (13,14) nach jeder vollen Messer- und Gegenmesserumdrehung eine Drehwinkelkorrektur der Messer (15,16) und des Gegenmessers (17) bezüglich der Schnittkonturlänge vorgesehen ist.

12. Vorrichtung nach Anspruch 11, **dadurch gekennzeichnet, daß** die Banddurchführung durch den Schneidbereich und die Umdrehung der Messer (15,16) und des Gegenmessers (17) so miteinander synchronisiert sind, daß am Banddurchführungsspalt (D) gleichzeitig ein Paar der sich gegenüberliegenden Ausklinkungen (13,14), der maximale axiale Abstand zwischen den Schneiden (151,161) der Messer (15,16) und der größte axiale Abstand zwischen den Gegenschneiden (171,172) des Gegenmessers (17) auftreten.

13. Vorrichtung nach Anspruch 11 oder 12, **dadurch gekennzeichnet, daß** die Länge (L) der Ausklinkungen (13,14) größer ist als die Sehne (a) des beim Schneiden des Bandes (10) in das Band (10) eintauchenden Bereichs der Schneiden (151,161), vorzugsweise das 1,5-fache der Sehne (a), beträgt.

14. Vorrichtung nach einem der Ansprüche 1 - 13, **gekennzeichnet durch** Abweismittel zum Ableiten der beim Schneiden entstehenden beiden Abfallstreifen (34) vom Gegenmesser (17) und ein rotierendes Trennmesser zum Zerhacken der Abfallstreifen (34).

15. Vorrichtung nach einem der Ansprüche 1 - 14, **dadurch gekennzeichnet, daß** am Band (10) eine im wesentlichen konstante Zugkraft angreift.

16. Vorrichtung nach einem der Ansprüche 3 - 15, **dadurch gekennzeichnet, daß** zum Schneiden von Bändern (10) mit über die Bandlänge variabler Banddicke (d) die die Gegenschneiden (171,172) tragenden, geschrägten Stirnflächen (174,175) des Gegenmessers (17) so korrigiert sind, daß die beiden Schneidspalte (S) zwischen Schneiden (151,161) und Gegenschneiden (171,172) über eine volle Umdrehung der Messer (15,16) und des Gegenmessers (17) und eine über die Schnittkonturlänge (1) vorgegebene Banddickenänderung im wesentlichen konstant bleiben.

17. Vorrichtung nach einem der Ansprüche 1 - 15, **dadurch gekennzeichnet, daß** zum Schneiden von Bändern (10) mit über die Bandlänge variabler Banddicke (d) die Eintauchtiefe (b) der Schneiden (151,161) in Abhängigkeit von der Banddicke (d) nachsteuerbar ist.

18. Vorrichtung nach Anspruch 17, **dadurch gekennzeichnet, daß** der Achsabstand zwischen den Messern (15,16) und dem Gegenmesser (17) in Abhängigkeit von der Banddicke (d) des in den Banddurchführungsspalt (D) zwischen den Messern (15,16) und dem Gegenmesser (17) einlaufenden Bandbereichs proportional veränderbar ist.

## Claims

1. Device for cutting the longitudinal edges of flat strips, in particular metal strips, with two circularly arcuate cutters (151, 161) which are spaced axially from one another and rotate about axes (152, 162) aligned with one another, and with two circularly arcuate countercutters (171, 172) which are spaced axially from one another and rotate about axes (173) aligned with one another and parallel to the axes (152, 162) of the cutters (151, 161) and which are assigned to the cutters (151, 161) in such a way that a radial gap (D) for leading through the strip (10) remains bridging the cutters (151, 161) and the countercutters (171, 172) and an axial cutting gap (S) is formed in each case between the cutters (151, 161) and countercutters (171, 172) assigned to one another in pairs, **characterized in that** the diameters of the cutters (151, 161) and countercutters (171, 172) are of essentially equal dimensioning, **in that** the cutters (151, 161) and countercutters (171, 172) lie in planes which run at an acute slant angle (α₁, α₂) with respect to a vertical plane (18) oriented at right angles to the cutter or countercutter axes (152, 162, 173), the cutter planes, on the one hand, and the countercutter planes, on the other hand, in each case being inclined or set in the opposite direction to the vertical plane (18), and **in that** the rotary positions of the cutters (151, 161) and countercutters (171, 172) are synchronized with one another in such a way that the two cutting gaps (S) remain approximately constant over a full revolution of the cutters (151, 161) and countercutters (171, 172).

2. Device according to Claim 1, **characterized in that** the cutters (151, 161) are formed in each case on one of two axially spaced roll-shaped knives (15, 16) and the countercutters (171, 172) on a roll-shaped counterknife (17), and **in that** the knives (15, 16), on the one hand, and the counterknife (17), on the other hand, are arranged so as to rotate on parallel axes (152, 162, 173) spaced from one another.

3. Device according to Claim 2, **characterized in that** the cutters (151, 161) are formed by the rotating edges of those end faces (153, 163) of the knives (15, 16) which face one another and the countercutters (171, 172) are formed by the rotating edges of those end faces (174, 175) of the counterknife (17) which face away from one another.

4. Device according to Claim 3, **characterized in that** the two knives (15, 16) are connected to one another rigidly in direction of rotation, in such a way that the clear axial spacing between the end faces (153, 163) of the knives (15, 16) result, on the one hand, in a maximum, and, on the other hand, in a minimum at two diametral cutter points, and **in that** the rotary position of the counterknife (17) is coordinated with the rotary position of the knives (15, 16) connected to one another, in such a way that, at the strip lead-through gap (D), the minimum axial spacing of the countercutters (171, 172) and the minimum axial spacing of the cutters (151, 161) occur at the commencement or at the end of each full revolution of the knives (15, 16) and counterknife (17) and the maximum axial spacing of the countercutters (171, 172) and the maximum axial spacing of the cutters (151, 161) occur after each half-revolution, or vice versa, in each case simultaneously.

5. Device according to Claim 3 or 4, **characterized in that** the interspace between the two end faces (153, 163) of the knives (15, 16) is filled with a press-out disc (19) rotating synchronously with the knives (15, 16).

6. Device according to Claim 5, **characterized in that** the circumference of the press-out disc (19) is covered, preferably vulcanized, with a layer (24) of elastic material, for example rubber, and **in that** the outside diameter of the layer (24) has a somewhat larger dimension than the outside diameter of the cutters (151, 161) of the knives (15, 16).

7. Device according to Claim 5 or 6, **characterized in that** the two knives (15, 16) and the press-out disc (19) are connected to one another to form a roll-type knife set (20) rotating about a common axis (152, 162).

8. Device according to Claim 7, **characterized in that** the roll-type knife set (20) is seated fixedly into the rotation on a drive shaft (23) and the two knives (15, 16) are fixed axially, on end faces facing away from one another, to radial shoulders (231, 232) of the drive shaft (23), in each case via an exchangeable spacer disc (21, 22).

9. Device according to one of Claims 1 - 8, **characterized in that** the counterknife (17) is divided along its mid-plane (18) and at least one exchangeable spacer disc (25) is arranged between the two counterknife halves (17a, 17b), and **in that** the two counterknife halves (17a, 17b) and the spacer disc (25) are releasably connected to one another axially.

10. Device according to one of Claims 2 - 9, **characterized in that** the circumference of the cutters (151, 161) and countercutters (171, 172) has a larger dimensioning, by the amount of an empirically determined correcting factor (k), than the required strip cutting length to be produced during one revolution of the knives (15, 16) and counterknife (17).

11. Device according to Claim 10, **characterized in that** the strip (10) is provided on the two longitudinal sides (101, 102) with indentations (13, 14) located opposite one another and having base lines (131, 141) which run preferably parallel to the strip longitudinal axis (103) and which are arranged equidistantly in pairs with the spacing corresponding to the circumference of the cutters (151, 161) and countercutters (171, 172), **in that** the depth of the two indentations (13, 14) is selected such that the web width (B₀), remaining between the indentations (13, 14), of the strip (10) is smaller than the strip cutting width, produced at this point, of the cutters (15, 16), and **in that**, after the cutters (151, 161) and countercutters (171, 172) have run into the indentations (13, 14), after each full knife and counterknife revolution, a rotary-angle correction of the knives (15, 16) and of the counterknife (17) with respect to the cutting contour length is provided.

12. Device according to Claim 11, **characterized in that** the strip lead-through through the cutting region and the rotation of the knives (15, 16) and of the counterknife (17) are synchronized with one another in such a way that, at the strip lead-through gap (D), a pair of the indentations (13, 14) located opposite one another, the maximum axial spacing between the cutters (151, 161) of the knives (15, 16) and the largest axial spacing between the countercutters (171, 172) of the counterknife (17) occur simultaneously.

13. Device according to Claim 11 or 12, **characterized in that** the length (L) of the indentations (13, 14) is larger than the cord (a) of the region of the cutters (151, 161) which penetrates into the strip (10) during the cutting of the strip (10), preferably amounts to 1.5 times the cord (a).

14. Device according to one of Claims 1 - 13, **characterized by** deflection means for diverting the two waste shreds (34) occurring during cutting from the counterknife (17) and by a rotating severing knife for chopping up the waste shreds (34).

15. Device according to one of Claims 1 - 14, **characterized in that** an essentially constant tensile force acts on the strip (10).

16. Device according to one of Claims 3 - 15, **characterized in that**, for the cutting of strips (10) with a strip thickness (d) which is variable over the strip length, the slanted end faces (174, 175) of the counterknife (17) which carry the countercutters (171, 172) are corrected in such a way that the two cutting gaps (S) between the cutters (151, 161) and countercutters (171, 172) remain essentially constant over a full revolution of the knives (15, 16) and of the counterknife (17) and a strip-thickness change predetermined over the cutting contour length (1).

17. Device according to one of Claims 1 - 15, **characterized in that**, for the cutting of strips (10) with a strip thickness (d) which is variable over the strip length, the depth of penetration (b) of the cutters (151, 161) can be readjusted a function of the strip thickness (d).

18. Device according to Claim 17, **characterized in that** the axial spacing between the knives (15, 16) and the counterknife (17) can be varied proportionally as a function of the strip thickness (d) of the strip region running into the strip lead-through gap (D) between the knives (15, 16) and the counterknife (17).

## Revendications

1. Dispositif de découpe des bords longitudinaux de rubans plats, notamment de feuillards, à l'aide de deux arêtes de coupe en arc de cercle (151, 161), axialement écartées, tournant autour d'axes alignés (152, 162), et de deux contre-arêtes de coupe (171, 172) en forme d'arc de cercle, écartées axialement l'une de l'autre, tournant autour d'axes (173), alignés, et parallèles aux axes (152, 162) des arêtes de coupe (151, 161), ces arêtes étant associées aux arêtes de coupe (151, 161) de sorte qu'
entre les arêtes de coupe (151, 161) et les contre-arêtes de coupe (171, 172) on a un intervalle radial (D) pour le passage de la bande (10) et
entre les arêtes de coupe (151, 161) associées par paires et les contre-arêtes de coupe (171, 172) on a chaque fois un intervalle de coupe (S), axial,
**caractérisé en ce que**
le diamètre des arêtes de coupe (151, 161) et des contre-arêtes de coupe (171, 172) sont dimensionnés de manière essentiellement identique,
les arêtes de coupe (151, 161) et les contre-arêtes de coupe (171, 172) se situent dans des plans faisant un angle d'inclinaison aigu (α₁, α₂) par rapport à un plan (18) perpendiculaire aux axes des couteaux et contre-couteaux (152, 162, 173),
et d'une part les plans des arêtes de coupe et d'autre part ceux des contre-arêtes de coupe sont inclinés en sens opposé par rapport au plan perpendiculaire (18) et
les positions de rotation des arêtes de coupe (151, 161) et des contre-arêtes de coupe (171, 172) sont synchronisées respectivement de façon que les deux intervalles de coupe (S) restent pratiquement constants pour une rotation complète des arêtes de coupe (151, 161) et des contre-arêtes de coupe (171, 172).

2. Dispositif selon la revendication 1,
**caractérisé en ce que**
les arêtes de coupe (151, 161) sont réalisées chaque fois par l'un des deux couteaux en forme de rouleau (15, 16) écartés axialement, et les contre-arêtes de coupe (171, 172) sont réalisées sur un contre-couteau (17) en forme de rouleau, et
les couteaux (15, 16), d'une part, et le contre-couteau (17), d'autre part, sont montés à rotation autour d'axes parallèles (152, 162, 173) écartés.

3. Dispositif selon la revendication 2,
**caractérisé en ce que**
les arêtes de coupe (151, 161) sont formées par les arêtes périphériques des surfaces frontales (153, 163) tournées l'une vers l'autre des couteaux (15, 16), et les contre-arêtes (171, 172) sont formées par les arêtes périphériques des surfaces frontales (174, 175) non tournées l'une vers l'autre du contre-couteau (17).

4. Dispositif selon la revendication 3,
**caractérisé en ce que**
les deux couteaux (15, 16) sont reliés rigidement dans le sens de rotation,
la distance axiale libre entre les surfaces frontales (153, 163) des couteaux (15, 16) donne en deux points de coupe diamétraux, d'une part un maximum, et, d'autre part, un minimum, et la position de rotation du contre-couteau (17) est accordée sur la position de rotation des couteaux (15, 16) reliés l'un à l'autre de façon qu'au niveau de l'intervalle de passage de bande (D), au début ou à la fin de chaque rotation complète des couteaux (15, 16) et du contre-couteau (17) on aura la distance axiale minimale des contre-arêtes de coupe (171, 172) et la distance axiale minimale des arêtes de coupe (151, 161), et qu'après chaque demi-rotation, on aura la distance axiale maximale des contre-arêtes de coupe (171, 172) et la distance axiale maximale des arêtes de coupe (151, 161), ou inversement simultanément.

5. Dispositif selon l'une quelconque des revendications 3 ou 4,
**caractérisé en ce que**
l'intervalle entre les deux surfaces frontales (153, 163) des couteaux (15, 16) est rempli d'un disque de pression (19) tournant en synchronisme avec les couteaux (15, 16).

6. Dispositif selon la revendication 5,
**caractérisé en ce que**
la périphérie du disque de pression (19) est revêtue d'une couche (24) d'une matière élastique, par exemple de caoutchouc, de préférence fixée par vulcanisation, et le diamètre extérieur de la couche (24) est sensiblement plus grand que le diamètre extérieur des arêtes de coupe (151, 161) des couteaux (15, 16).

7. Dispositif selon l'une quelconque des revendications 5 ou 6,
**caractérisé en ce que**
les deux couteaux (15, 16) et le disque de pression (19) sont reliés pour former un jeu de couteaux à rouleau (20) tournant autour d'un axe commun (152, 162).

8. Dispositif selon la revendication 7,
**caractérisé en ce que**
le jeu de couteaux à rouleau (20) est monté solidairement en rotation sur un arbre d'entraînement (23), et les deux couteaux (15, 16) sont fixés axialement sur des faces frontales opposées, par chaque fois un disque d'écartement interchangeable (21, 22) sur les épaulements radiaux (231, 232) de l'arbre d'entraînement (23).

9. Dispositif selon l'une quelconque des revendications 1 à 8,
**caractérisé en ce que**
le contre-couteau (17) est divisé le long de son plan médian (18) et entre les deux moitiés de contre-couteau (17a, 17b) on a au moins un disque d'écartement interchangeable (25), et
les deux moitiés de contre-couteau (17a, 17b) et le disque d'écartement (25) sont reliés axialement les uns aux autres de manière démontable.

10. Dispositif selon l'une quelconque des revendications 2 à 9,
**caractérisé en ce que**
la périphérie des arêtes de coupe (151, 161) est des contre-arêtes de coupe (171, 172) est augmentée d'un coefficient de correction (k) déterminé de manière empirique par rapport à la longueur de coupe de ruban demandée, obtenue par la rotation des couteaux (15, 16) et du contre-couteau (17).

11. Dispositif selon la revendication 10,
**caractérisé en ce que**
le ruban (10) comporte, au niveau des deux grands côtés (101, 102), des dégagements opposés (13, 14) avec des lignes de base (131, 141), de préférence parallèles à l'axe longitudinal (103) de la bande, ces dégagements étant prévus par paires de manière équidistante d'une distance correspondant à la périphérie des arêtes de coupe (151, 161) et des contre-arêtes de coupe (171, 172),
la profondeur des deux dégagements (13, 14) étant choisie pour que la largeur (B₀) de la bande (10) qui subsiste entre les dégagements (13, 14) soit inférieure à la largeur de coupe de bande par les arêtes de coupe (15, 16) à cet endroit, et
après la pénétration des arêtes de coupe (151, 161) et des contre-arêtes de coupe (171, 172) dans les dégagements (13, 14), après une rotation complète respective des couteaux et contre-couteaux, on effectue une correction d'angle de rotation des couteaux (15, 16) et du contre-couteau (17) par rapport à la longueur du contour de coupe.

12. Dispositif selon la revendication 11,
**caractérisé en ce que**
le guidage de la bande dans la zone de coupe et la rotation des couteaux (15, 16) et du contre-couteau (17) sont synchronisés respectivement de façon qu'au niveau de l'intervalle de passage de bande (D), on aura en même temps une paire de dégagements opposés (13, 14), la distance axiale maximale entre les arêtes de coupe (151, 161) des couteaux (15, 16) et la plus grande distance axiale entre les contre-arêtes de coupe (171, 172) du contre-couteau (17).

13. Dispositif selon l'une quelconque des revendications 11 ou 12,
**caractérisé en ce que**
la longueur (L) des dégagements (13, 14) est supérieure à la corde (a) de la zone des arêtes de coupe (151, 161) pénétrant dans la bande (10) lors de la découpe de celle-ci, l'augmentation étant de préférence de 1,5 fois la longueur de la corde (a).

14. Dispositif selon l'une quelconque des revendications 1 à 13,
**caractérisé par**
un moyen d'écartement pour dévier les deux bandes de déchets (34) formées par la découpe par rapport au contre-couteau (17) et un couteau de séparation, rotatif, pour hacher les bandes de déchets (34).

15. Dispositif selon l'une quelconque des revendications 1 à 14,
**caractérisé en ce qu'**
on applique une force de traction essentiellement constante à la bande (10).

16. Dispositif selon l'une quelconque des revendications 3 à 15,
**caractérisé en ce que**
pour couper les bandes (10) d'épaisseur (d) variable en fonction de la longueur, on corrige les surfaces frontales (174, 175) du contre-couteau (17), portant les contre-arêtes de coupe (171), pour que les deux intervalles de coupe (S) entre les arêtes de coupe (151, 161) et les contre-arêtes de coupe (171, 172), pour une rotation complète des couteaux (15, 16) et du contre-couteau (17), et une variation d'épaisseur de bande prédéterminée suivant la longueur de contour de coupe (1) restent essentiellement constantes.

17. Dispositif selon l'une quelconque des revendications 1 à 15,
**caractérisé en ce que**
pour découper les bandes (10) ayant une épaisseur (d) variable suivant leur longueur, on asservit la profondeur de pénétration (b) des arêtes de coupe (151, 161) en fonction de l'épaisseur de bande (d).

18. Dispositif selon la revendication 17,
**caractérisé en ce qu'**
on modifie la distance des axes des couteaux (15, 16) et du contre-couteau (17) proportionnellement suivant l'épaisseur de bande (d) de la zone de bande pénétrant dans l'intervalle de passage de bande (D) entre les couteaux (15, 16) et le contre-couteau (17).
